# NEW EUROPEAN PATENT SPECIFICATION

(11) **EP 0 842 600 B2**
(45) Date of publication and mention of the opposition decision: **01.06.2005**
(45) Mention of the grant of the patent: 17.07.2002
(21) Application number: 97203714.7
(22) Date of filing: 02.04.1993
(51) Int. Cl.: A01J 5/017

(54) **A construction for automatically milking animals**
Gerät zum automatischen Melken von Tieren
Dispositif de traite automatique d'animaux

(30) Priority: 06.04.1992 NL 9200639
(43) Date of publication of application: 20.05.1998
(62) Divisional of application: 93200982.2
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- EP-A- 0 232 568
- EP-A- 0 300 582
- EP-A- 0 302 559
- EP-A- 0 313 109
- EP-A- 0 332 232
- EP-A- 0 349 019
- EP-A- 0 467 489
- WO-A-85/02973
- GB-A- 2 218 888
- US-A- 4 010 714
- US-A- 5 069 160
- VDI/MEG Kolloquium Landtechnik, Heft 9, "Robotereinsatz in der Landwirtschaft am Beispiel des Melkens", Tagung 5/6 Dezember 1990

## Description

The present invention relates to a construction for automatically milking animals, such as cows, according to the preamble of claim 1.

Such a construction is known, e.g. from US-A-4 010 714.

The invention has for its object to provide on improved construction.

According to the invention this is achieved by the features of claim 1. Further preferred embodiments are specified in the dependent claims.

For safety reasons it may be of advantage for a protection memberto be provided at its upper side with a protected rim of flexible material.

For a better understanding of the invention and to show how the same may be carried into effect, reference will now be made, by way of example, to the accompanying drawings, in which:
Figure 1 is a plan view of a milking parlour comprising a milking machine and a schematically shown cow present in this parlour;

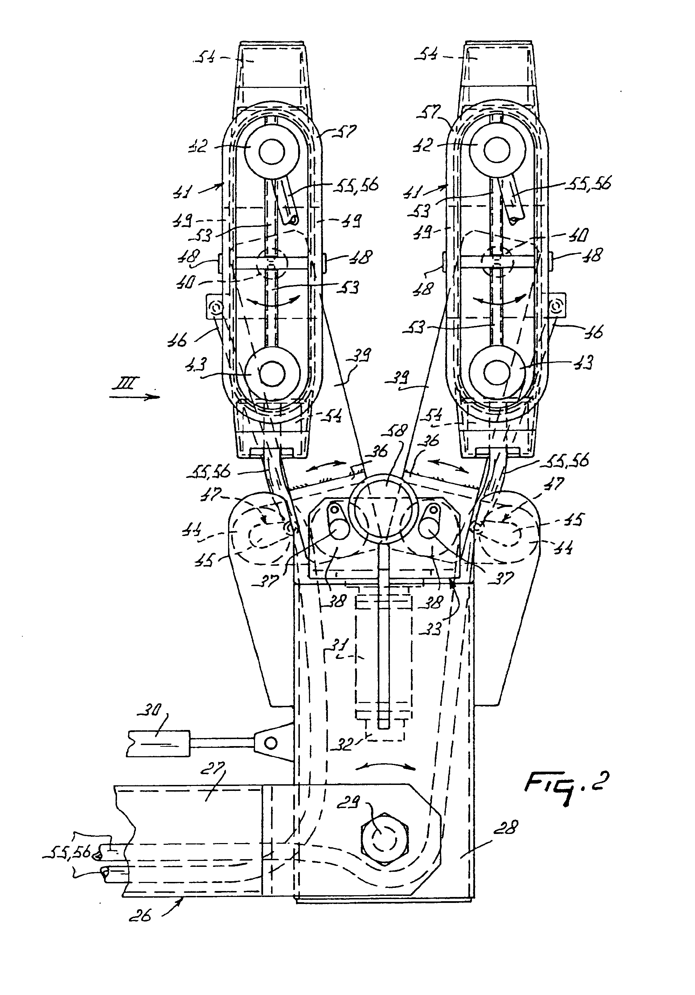

Figure 2 is a plan view of a portion of a milking robot forming part of the milking machine;
Figure 3 is a side view of that portion of the milking robot that is shown in Figure 2;
Figure 4 is a cross-sectional view taken on the line IV-IV in Figure 3;
Figure 5 is a cross-sectional view taken on the line V-V in Figure 3, and
Figures 6, 7 and 8 are diagrams with reference to which possible motions of the teat cups are explained.

Corresponding components in the drawings have been given the same reference numerals. The invention is in no way limited to the embodiment shown and described here; it only serves by way of illustration of the inventive idea.

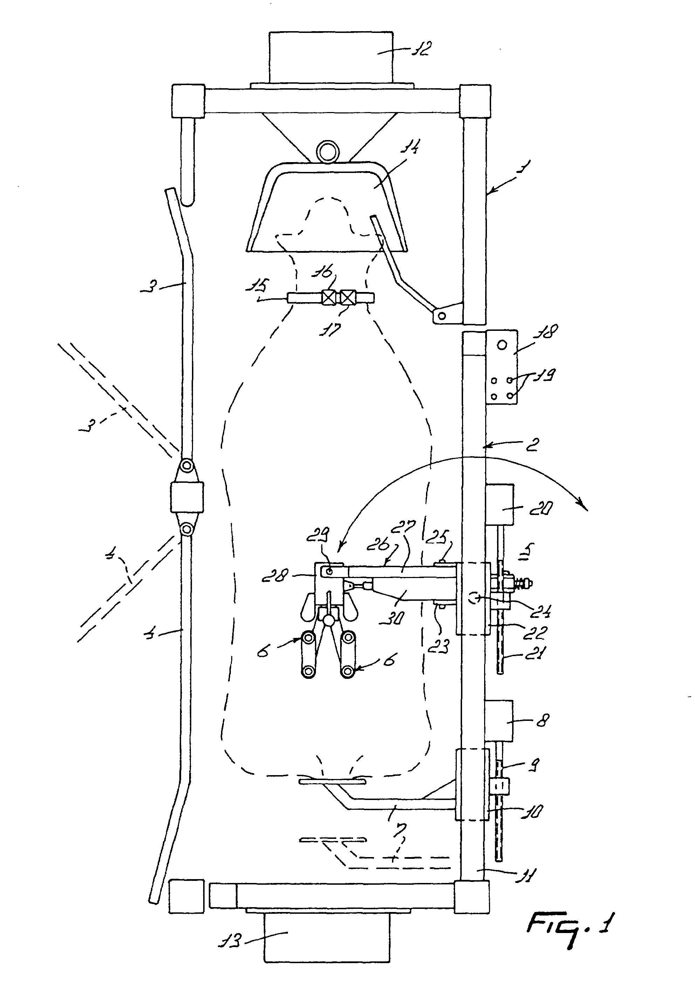

Figure 1 shows a milking parlour in which, inside a railing formed by a leading railing portion 1, a trailing railing portion 2 and railing doors 3 and 4, a milch cow is present. The milking parlour comprises a milking machine having a milking robot 5 for connecting teat cups 6 to the teats of the cow's udder. For a rough determination of a necessary starting position of the cow in the milking parlour, the milking machine co-operates with a positioning member 7. The positioning member 7 is movable with the aid of a stepper motor 8, a threaded spindle 9 connected thereto and a straight guide 10 over a horizontal carrier 11, which forms part of the trailing railing portion 2. Such a carrier 11 may alternatively be accommodated against or beside an existing railing. The milking parlour includes a computer system 12 which controls an automatic feeder. The computer system 12 of the automatic feeder is operative in dependence on a computer system 13 for the milking machine and ensures that, each time it detects, recognizes and in addition acknowledges a cow in the milking parlour 1, a quantity of fodder adapted to the animal is placed into a feeding trough 14, which feeding trough is attached to the leading railing portion 1.

The cow wears around its neck a collar 15, to which information carriers annex transmission elements 16 and 17, which form part of a cow identification system, are attached. These elements are each separately at the disposal of one of the two computer systems 12, 13, in order to safeguard the independent operation of the two computers. One information carrier annex transmission element 16 co-operates with the computer-controlled feeding system, while the other information carrier annex transmission element 17 co-operates with the computer 13 which provides for the process control of the milking robot 5. In addition, a warning panel 18 is attached to the milking parlour to indicate the presence of the milk flow coming from a teat of the cow's udder. There is a pilot light 19 for each teat, which lights up when via a sensor in a relevant teat cup 6 or in a milk line connected thereto it is detected that the milk flow has decreased to below a preset value. The warning panel 18 may alternatively be provided with two pilot lights, one pilot light emitting, for example, green light during the milking operation and the other one emitting, for example, red light when the milk flow has fallen to below a preset threshold value. In yet another embodiment the warning panel 18 may acoustically indicate stoppage of the milk flow, for example by means of a buzzer.

The milking robot 5 is disposed capable of sliding on the horizontal carrier 11 in the lengthwise direction of the milking parlour, i.e. in the direction from an imaginary line between head and tail of a cow standing in the milking parlour. With the aid of a stepper motor 20 and a threaded spindle 21 which acts on a straight guide 22, the milking robot 5 can be moved in the longitudinal direction of the milking parlour. The stepper motor 20 is then controlled from the computer 13 of the milking machine. A carrier support 23, which is pivotal about a shaft 24 which is vertically connected to the straight guide 22, is attached to the bottom side of the straight guide 22. Attached to the carrier support 23, capable of pivoting about a horizontal shaft 25, is a robot arm construction 26 which is formed by a first robot arm portion 27 and a second robot arm portion 28 which is pivotal with respect to the first robot arm portion. In the rest condition, the second robot arm portion 28 is at a right angle to the first robot arm portion 27 and is pivotal relative to this portion about a vertical shaft 29 and is controllable relative to the first robot arm portion 27 by means of an operating cylinder 30.

Arranged near the leading end of the second robot arm portion 28 there is in this robot arm portion a carrier structure 31, in which carrier structure 31 a shaft 32 which extends substantially horizontally in the longitudinal direction of the second robot arm portion 28 is rotatably disposed. A bifurcated element 33 is rigidly connected to this shaft 32. This bifurcated element 33 consists of a vertical portion 34 which is rigidly attached to the shaft 32 and a portion 35 which extends horizontally at the upper and lower end of this vertical portion 34. The bifurcated element 33 is freely rotatable in the carrier structure 31 and consequently freely rotatable with respect to the second robot arm portion 28. Two supporting elements 36 are rotatably arranged between the horizontal portions 35 of the bifurcated element 33 with the aid of predominantly vertical shafts 37. Two first motors 38 are connected to the bifurcated element 33; via the drive shaft of each of these motors 38 it is possible to obtain a pivotal motion of a supporting element 36 relative to the end of the second robot arm 28. These first motors 38 are designed as stepper motors and are furthermore provided with a gear reduction for effecting a limited and accurate pivotal motion of the supporting element. With the aid of these motors, the supporting elements 36 can consequently perform a kind of scissor-like motion with respect to the longitudinal shaft of the second robot arm portion 28, although it should be noted that the motion of one supporting element 36 is always independent of the motion of the other supporting element 36. At their lower ends, the supporting elements 36 have a forwardly and substantially horizontally extending portion 39. Near the end of this forwardly extending portion 39 of a supporting element 36 there are provided, capably of rotation about a predominantly vertical shaft 40, protection members 41 for teat cups 42 and 43. Each of the protection members 41 is pivotal about the relevant shaft 40 by means of a second motor 44 which is rigidly connected to the relevant supporting element 36, the second motor 44 also being designed as a stepper motor having a reduction gear. With the aid of the second motor 44, and also by a lever construction 47 which is formed by an arm 45 and a control rod 46 and whose end is connected freely rotatably to a relevant protection member 41, the protection member 41 can be pivoted about the shaft 40. Using the said first and second motors 38 and 44, it is consequently possible to obtain on the one hand a pivotal motion of a supporting element 36 about the shaft 37 and on the other hand a pivotal motion of a protection member 41 about a shaft 40. These two pivotal motions in combination result on the one hand in the possibility of moving the protection member 41 in a lateral direction relative to the longitudinal shaft of the second robot arm portion 28, and on the other hand in a possibility of setting relative to each other the mutual spacing between the respective teat cups 42 and 43 in the two protection members. In addition, each of the protection members 41 is disposed freely pivotably about aligned shaft portions or pins 48 between two upwardly extending supports 49. These upwardly extending supports 49 are interconnected near their bottom ends, the intermediate section interconnecting the supports 49 being pivotal about the shaft 40. The protection members 41 realize a protection provided around the circumference of a teat cup. The protection member protects the teat cups and promotes the continuous connection of the teat cups to the teats. In the present embodiment, this protection member extends through the overall circumference around two teat cups. The protection member is in the shape of a box. Towards the box-like protection members 41 there are provided at some distance from the bottom two strips 50 which extend in the longitudinal direction of the protection member. Carriers 51 are movable along these strips 50 in the longitudinal direction of the protection members 41. Respective teat cups 42 and 43 are disposed on each carrier 51 with the aid of a pressure spring 52. Because of the arrangement with the aid of a pressure spring 52, the teat cups 42 and 43 can freely perform any possible tilting motions on the relevant carrier 51. The carriers 51 in a protection member 41 can be moved independently of each other in the longitudinal direction of the protection member by means of a motor-driven threaded spindle 53. To that end, two third motors 54 are connected to each protection member 41. Also these third motors 54 are all designed as stepper motors. By means of the four motors 54 thus present, the teat cups 42 and 43 can be moved independently of each other in the longitudinal direction of a protection member 41. The milk and pulsation pipelines 55 and 56, respectively, leading from the teat cups 42 and 43 inside the protection member 41, are forthat purpose passed via apertures made in the second robot arm portion 28 through this second robot arm portion and thereafter through the first robot arm portion 27.

The upper side of each of the protection members 41 is provided with a protective rim 57, which is made of a resilient material. In spite of the fact that the teat cups 42 and 43 extend to above the protection members 41, this rim 57 nevertheless has a protective function.

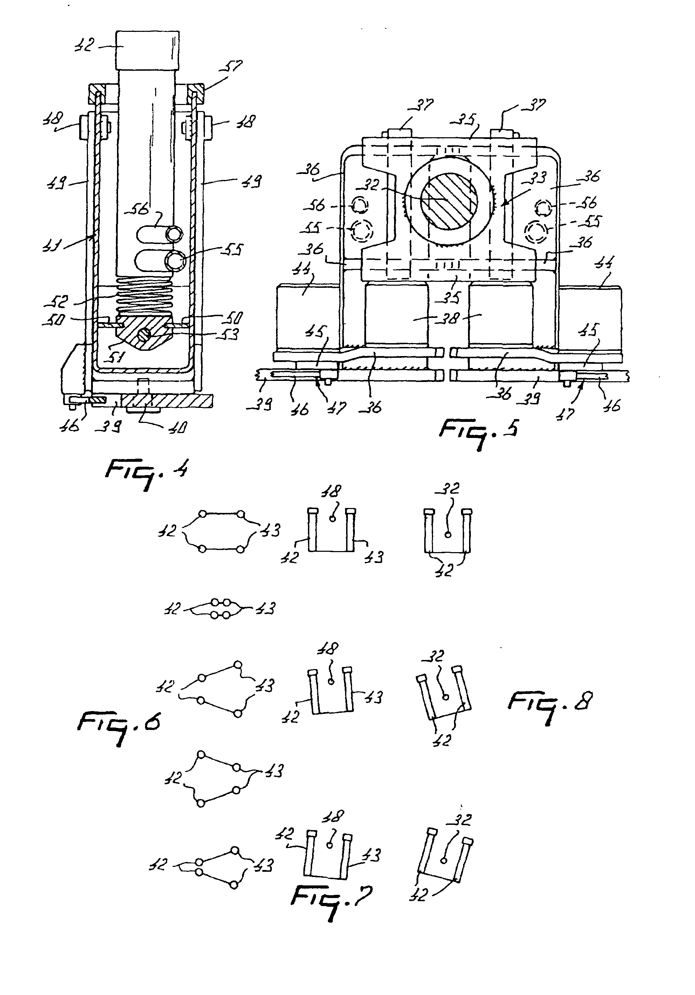

Figures 6, 7 and 8 show a number of diagrams which illustrate the various motions of the teat cups 42 and 43. Figure 6 schematically shows the relative position of the teat cups 42 and 43 in a predominantly horizontal plane. It is illustrated how, starting from a reference position as indicated in the upper diagram in Figure 6, by a lateral motion of the protection members by means of the first and second motors 38 and 44 and by moving the teat cups 42 and 43 up to each other with the aid of the third motors 43, the situations shown in the remaining diagrams of Figure 6 can be obtained, wherein by a pivotal motion about the shaft 40 by means of the third motors 54, if necessary combined with a lateral motion, a position of the individual teat cups is obtained, in which the spacing between the teat cups 42 and the spacing between the teat cups 43 differ. The aforesaid eight motors, i.e. the two first motors 38, the two second motors 44 and the four third motors 54 provide that the teat cups can assume any possible positions necessary for connection of the cups to the teats of an animal to be milked. Figure 7 shows a number of diagrams which illustrate the free pivotability of a protection member 41 about the shaft members 48. Figure 8 shows diagrams which illustrate the free pivotability of the supporting elements 36 in conjunction with the protection members 41 about the shaft 32. Because of the fact that the teat cups 42 and 43 can pivot freely relative to the shafts 32 and 48, an optimal adaptation of the position of the teat cups to the specific shape of the udder of a cow can be obtained.

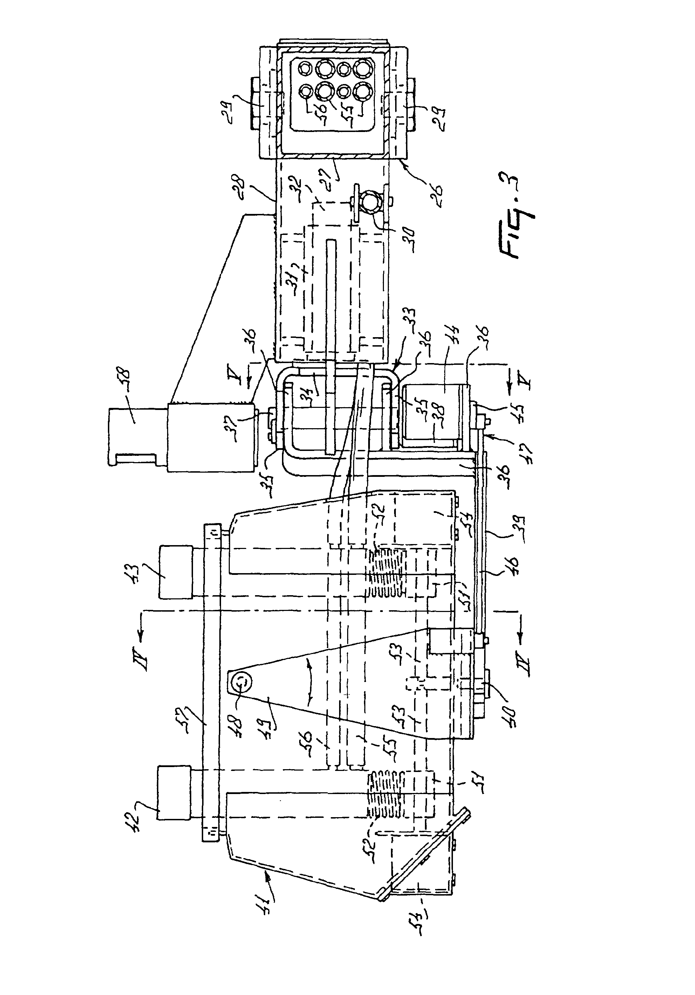

Figure 3 furthermore shows a detector, more specifically a laser detector 58, which is rigidly fastened on the second robot arm portion 28. When, on the basis of either cow identification data or on the basis of data provided by mechanical positioning means, the robot arm has been roughly positioned under the udder of a cow, the position of the teats is determined with the aid of the detector 58, whereafter the positional information supplied by the detector 58 is applied to the computer system 13, with the aid of which the control signals for the motors 38, 44 and 54 are obtained. After the position of the individual teat cups 42 and 43 is readjusted such in an approximately horizontal plane that each teat cup is approximately under a relevant teat, the robot arm construction 26 can be moved upwards. Put differently, the teat cups can be connected substantially simultaneously, whilst because of the fact that the cups can freely tilt about the shafts 32 and 48 an adaptation to the teats of the animal is obtained. This adaptation is still further increased by the manner in which the teat cups 42 and 43 are accommodated in the holder 41 by means of pressure springs 52.

## Claims

1. A construction for automatically milking animals, such as cows, comprising a milking machine having a number of teat cups (42, 43), wherein a protection member (41) is protecting a teat cup (42, 43),
the protection member (41) being box-like and containing at least one teat cup (42, 43), **characterized in that** of two pairs of teat cups (42; 43) both pairs are each mounted in a protection member (41), whereas the protection members (41) are movable to and away from each other.

2. A construction as claimed in claim 1, **characterized in that** two teat cups (42; 43) are mounted in the protection member (41) in such a way that the protection member protects the teat cup for attacks by the leg of the animal.

3. A construction as claimed in any one of the claims 1 - 2, **characterized in that** a teat cup (42, 43) is resiliently supported.

4. A construction as claimed in claim 3, **characterized in that** a teat cup (42, 43) is mounted in the protection member (41) by a pressure spring (52).

5. A construction according to any of claims 1 - 4, **characterized in that** the teat cups (42, 43) are mounted pair-wise in a protection member (41), whereby the protection members (41) are capable of being movable to and from each other.

6. A construction as claimed in any one of the claims 2 - 5, **characterized In that** the teat cups (42, 43) mounted in a protection member (41) are movable in the protection member in the longitudinal direction of the protection member (41).

7. A construction as claimed in claim 6, **characterized in that** a protection member (41) is provided with two motors (54) for driving threaded spindles (53), with the aid of which the teat cups (42, 43) can be moved inside the protection member (41).

8. A construction as claimed in any one of the claims 2 - 7, **characterized in that** at its upper side a protection member (41) is provided with a protective rim (57) made of a flexible material.

9. A construction as claimed in any one of the claims 2 - 8, **characterized In that** the teat cups (42, 43) project to above the upper edge of the protection member (41).

10. A construction as claimed in any one of the claims 2 - 9, **characterized in that** a protection member (41) is mounted freely pivotably about a horizontal shaft (48) on a supporting element (36) which is pivotably connected to the end of a robot arm (33).

## Patentansprüche

1. Vorrichtung zum automatischen Melken von Tieren, wie z. B. Kühen, die eine Melkmaschine mit einer Anzahl von Zitzenbechern (42, 43) umfaßt, wobei ein Zitzenbecher (42, 43) von einem Schutzglied (41) geschützt wird, wobei das Schutzglied (41) kastenförmig ausgebildet ist und mindestens einen Zitzenbecher (42, 43) enthält,
**dadurch gekennzeichnet, daß** von zwei Paaren von Zitzenbechern (42; 43) beide Paare jeweils in einem Schutzglied (41) angeordnet sind, wobei die Schutzglieder (41) aufeinander zu und voneinander weg bewegbar sind.

2. Vorrichtung nach Anspruch 1,
**dadurch gekennzeichnet, daß** zwei Zitzenbecher (42; 43) in dem Schutzglied (41) derart angeordnet sind, daß das Schutzglied den Zitzenbecher gegen Angriffe durch das Bein des Tieres schützt.

3. Vorrichtung nach einem der Ansprüche 1 bis 2,
**dadurch gekennzeichnet, daß** ein Zitzenbecher (42, 43) elastisch abgestützt ist.

4. Vorrichtung nach Anspruch 3,
**dadurch gekennzeichnet, daß** ein Zitzenbecher (42, 43) in dem Schutzglied (41) durch eine Druckfeder (52) angebracht ist.

5. Vorrichtung nach einem der Ansprüche 1 bis 4,
**dadurch gekennzeichnet, daß** die Zitzenbecher (42, 43) paarweise in einem Schutzglied (41) angeordnet sind, wobei die Schutzglieder (41) aufeinander zu und voneinander weg bewegbar sind.

6. Vorrichtung nach einem der Ansprüche 2 bis 5,
**dadurch gekennzeichnet, daß** die in einem Schutzglied (41) angeordneten Zitzenbecher (42, 43) in dem Schutzglied in Längsrichtung des Schutzgliedes (41) bewegbar sind.

7. Vorrichtung nach Anspruch 6,
**dadurch gekennzeichnet, daß** ein Schutzglied (41) mit zwei Motoren (54) zum Antreiben von Gewindespindeln (53) versehen ist, mit deren Hilfe die Zitzenbecher (42, 43) innerhalb des Schutzgliedes (41) bewegt werden können.

8. Vorrichtung nach einem der Ansprüche 2 bis 7,
**dadurch gekennzeichnet, daß** ein Schutzglied (41) an seiner Oberseite mit einem Schutzrand (57) aus einem flexiblen Material versehen ist.

9. Vorrichtung nach einem der Ansprüche 2 bis 8,
**dadurch gekennzeichnet, daß** die Zitzenbecher (42, 43) über den oberen Rand des Schutzgliedes (41) hinausstehen.

10. Vorrichtung nach einem der Ansprüche 2 bis 9,
**dadurch gekennzeichnet, daß** ein Schutzglied (41) frei drehbar um eine horizontale Achse (48) auf einem Stützelement (36) angeordnet ist, das mit dem Ende eines Roboterarmes (33) schwenkbar verbunden ist.

## Revendications

1. Structure pour traire automatiquement des animaux, par exemple des vaches, comprenant une machine de traite ayant un certain nombre de gobelets trayeurs (42, 43), dans laquelle un élément de protection (41) protège un gobelet trayeur (42, 43), l'élément de protection (41) se présentant sous forme de boîte et contenant au moins un gobelet trayeur (42, 43), **caractérisée en ce que** parmi deux paires de gobelets trayeurs (42 ; 43), les deux paires sont montées chacune dans un élément de protection (41), tandis que les éléments de protection (41) peuvent être rapprochés et éloignés les uns des autres.

2. Structure selon la revendication 1, **caractérisée en ce que** deux gobelets trayeurs (42 ; 43) sont montés dans l'élément de protection (41) de manière à ce que l'élément de protection protège le gobelet trayeur des coups donnés par la patte de l'animal.

3. Structure selon l'une quelconque des revendications 1-2, **caractérisée en ce qu'**un gobelet trayeur (42, 43) est supporté de manière élastique.

4. Structure selon la revendication 3, **caractérisée en ce qu'**un gobelet trayeur (42, 43) est monté dans l'élément de protection (41) à l'aide d'un ressort de pression (52).

5. Structure selon l'une quelconque des revendications 1-4, **caractérisée en ce que** les gobelets trayeurs (42, 43) sont montés par paires dans un élément de protection (41), moyennant quoi les éléments de protection (41) peuvent être rapprochés et éloignés les uns des autres.

6. Structure selon l'une quelconque des revendications 2-5, **caractérisée en ce que** les gobelets trayeurs (42, 43) montés dans un élément de protection (41) sont mobiles dans l'élément de protection dans la direction longitudinale de l'élément de protection (41).

7. Structure selon la revendication 6, **caractérisée en ce qu'**un élément de protection (41) est muni de deux moteurs (54) pour entraîner des arbres filetés d'entraînement (53), à l'aide desquels les gobelets trayeurs (42, 43) peuvent être déplacés à l'intérieur de l'élément de protection (41).

8. Structure selon l'une quelconque des revendications 2-7, **caractérisée en ce que**, au niveau de son côté supérieur, un élément de protection (41) est muni d'un bord protecteur (57) fabriqué en matériau flexible.

9. Structure selon l'une quelconque des revendications 2-8, **caractérisée en ce que** les gobelets trayeurs (42, 43) dépassent au-dessus du bord supérieur de l'élément de protection (41).

10. Structure selon l'une quelconque des revendications 2-9, **caractérisée en ce qu'**un élément de protection (41) est monté de manière à tourner librement autour d'un axe horizontal (48) sur un élément de support (36) qui est raccordé de manière pivotante à l'extrémité d'un bras robotisé (33).
